(19) Europäisches Patentamt
European Patent Office
Office européen des brevets

(11) **EP 4 787 339 A2**

(12) **EUROPEAN PATENT APPLICATION**

(43) Date of publication:
**05.08.2026 Bulletin 2026/32**

(21) Application number: **26187787.2**

(22) Date of filing: **25.06.2026**

(51) International Patent Classification (IPC):
**G06V 10/82** (2022.01)   **G06T 5/94** (2024.01)
**G06T 7/90** (2017.01)   **H04N 23/71** (2023.01)
**H04N 23/84** (2023.01)

(52) Cooperative Patent Classification (CPC):
**G06V 10/82; G06T 5/94; G06T 7/90; H04N 23/71; H04N 23/84**

(84) Designated Contracting States:
**AL AT BE BG CH CY CZ DE DK EE ES FI FR GB GR HR HU IE IS IT LI LT LU LV MC MD ME MK MT NL NO PL PT RO RS SE SI SK SM TR**
Designated Extension States:
**BA**
Designated Validation States:
**GE KH LA MA TN**

(30) Priority: **27.03.2026 CN 202610398132**

(71) Applicant: **XG TECH PTE. LTD.**
**Singapore 179098 (SG)**

(72) Inventors:
• **LIN, Wei**
**179098 Singapore (SG)**
• **BAI, Yulong**
**179098 Singapore (SG)**

(74) Representative: **Patentanwälte Magenbauer & Kollegen**
**Partnerschaft mbB**
**Plochinger Straße 109**
**73730 Esslingen (DE)**

(54) **IMAGE LUMINANCE ASSESSMENT METHOD AND APPARATUS, READABLE STORAGE MEDIUM, AND ELECTRONIC DEVICE**

(57)     The present disclosure provides an image luminance assessment method and apparatus, a readable storage medium, and an electronic device. The method includes: acquiring a raw image on which luminance assessment is to be performed; separately performing luminance weight estimation on pixels in the raw image to obtain a luminance weight set corresponding to each of the pixels; performing, for any pixel in the raw image based on a luminance weight set corresponding to the pixel, weighted summation on color components included in a first target region in which the pixel is located, to obtain a luminance value corresponding to the pixel; and generating, based on the luminance values respectively corresponding to the pixels in the raw image, a luminance assessment map corresponding to the raw image.

EP 4 787 339 A2

**Description**

**TECHNICAL FIELD**

The present disclosure relates to a computer vision technology, and in particular, to an image luminance assessment method and apparatus, a readable storage medium, and an electronic device.

**BACKGROUND**

Luminance assessment refers to a quantitative analysis process of the light-dark degree of pixels in an image, which is a fundamental and critical step in the field of RAW image (that is, raw data directly acquired by a camera sensor) processing. A currently commonly used luminance assessment method typically uses a fixed filter kernel (for example, a $3\times3$ mean filter or weighted average filter template) to perform convolution operations on RAW format array data, to estimate a luminance value of each pixel region.

The current luminance assessment method is implemented based on global statistics of pixels of the image, and cannot adapt to local spectral variations in the image caused by different illumination conditions and object surface reflective properties. Such luminance estimation that does not match local content results in a converted luminance map that cannot truly reflect scene light-dark distribution, and the luminance map cannot meet an actual image processing requirement.

**SUMMARY**

To resolve the foregoing technical problems, the present disclosure provides an image luminance assessment method and apparatus, a readable storage medium, and an electronic device, so as to solve a problem of large deviation between a luminance map and an actual scene caused by luminance calculation performed by using fixed weights for color components during luminance assessment.

According to a first aspect of embodiments of the present disclosure, there is provided an image luminance assessment method, including: acquiring a raw image on which luminance assessment is to be performed; separately performing luminance weight estimation on pixels in the raw image to obtain a luminance weight set corresponding to each of the pixels, where each luminance weight in the luminance weight set corresponds to one color component; performing, for any pixel in the raw image based on a luminance weight set corresponding to the pixel, weighted summation on color components included in a first target region in which the pixel is located, to obtain a luminance value corresponding to the pixel, where the first target region is an image region of a first preset size with the pixel as a reference point; and generating, based on the luminance values respectively corresponding to the pixels in the raw image, a luminance assessment map corresponding to the raw image.

According to a second aspect of embodiments of the present disclosure, there is provided an image luminance assessment apparatus, including: an acquisition module, configured for acquiring a raw image on which luminance assessment is to be performed; an estimation module, configured for separately performing luminance weight estimation on pixels in the raw image to obtain a luminance weight set corresponding to each of the pixels, where each luminance weight in the luminance weight set corresponds to one color component; a calculation module, configured for performing, for any pixel in the raw image based on a luminance weight set corresponding to the pixel, weighted summation on color components included in a first target region in which the pixel is located, to obtain a luminance value corresponding to the pixel, where the first target region is an image region of a first preset size with the pixel as a reference point; and a generation module, configured for generating, based on the luminance values respectively corresponding to the pixels in the raw image, a luminance assessment map corresponding to the raw image.

According to a third aspect of embodiments of the present disclosure, there is provided a computer readable storage medium, on which a computer program is stored, and the computer program, when executed, is used for implementing the foregoing image luminance assessment method.

According to a fourth aspect of embodiments of the present disclosure, there is provided an electronic device, including: a processor; a memory configured for storing instructions executable by the processor; and the processor, configured for reading the executable instructions from the memory, and executing the instructions to implement the foregoing image luminance assessment method.

According to a fifth aspect of embodiments of the present disclosure, there is provided a computer program product, including computer program instructions, where the computer program instructions, when executed by an instruction processor, perform the foregoing image luminance assessment method.

Based on the image luminance assessment method and apparatus, the readable storage medium, and the electronic device provided by the embodiments of the present disclosure, luminance weight estimation is separately performed on the pixels in the raw image to obtain the luminance weight set corresponding to each of the pixels, subsequently, weighted summation is performed, based on the luminance weight set corresponding to each of the pixels, on color components included in a first target region in which each of the pixels is located, to obtain the luminance value corresponding to the pixel, and finally, the luminance assessment map is generated based on the luminance values respectively corresponding to the pixels in the raw image. In this way, adaptive adjustment of luminance weights of the color components of each of the pixels is achieved based on a local luminance feature at a location of each of the pixels in the image, so that the luminance assessment map obtained by using the luminance weights can more accurately reflect scene light-dark distribution perceived by human eyes, and local luminance in the image reflected by the luminance assessment map is more consistent with visual perception characteristics of the human eyes, thereby facilitating provision of more accurate luminance assessment data and meeting a requirement for highly accurate luminance assessment maps in various image processing scenarios.

## BRIEF DESCRIPTION OF DRAWINGS

FIG. 1 is a schematic flowchart illustrating an image luminance assessment method according to an exemplary embodiment of the present disclosure.

FIG. 2 is a schematic flowchart illustrating an image luminance assessment method according to another exemplary embodiment of the present disclosure.

FIG. 3 is a schematic flowchart illustrating an image luminance assessment method according to still another exemplary embodiment of the present disclosure.

FIG. 4 is a schematic flowchart illustrating an image luminance assessment method according to still another exemplary embodiment of the present disclosure.

FIG. 5 is a schematic flowchart illustrating an image luminance assessment method according to still another exemplary embodiment of the present disclosure.

FIG. 6 is a schematic flowchart illustrating an image luminance assessment method according to still another exemplary embodiment of the present disclosure.

FIG. 7 is a diagram illustrating a structure of a luminance estimation model according to an exemplary embodiment of the present disclosure.

FIG. 8 is a diagram illustrating a training process of a luminance estimation model according to an exemplary embodiment of the present disclosure.

FIG. 9 is a schematic flowchart illustrating an image luminance assessment method according to still another exemplary embodiment of the present disclosure.

FIG. 10 is a diagram illustrating a structure of an image luminance assessment apparatus according to an exemplary embodiment of the present disclosure.

FIG. 11 is a diagram illustrating a structure of an image luminance assessment apparatus according to another exemplary embodiment of the present disclosure.

FIG. 12 is a diagram illustrating a structure of an electronic device according to an exemplary embodiment of the present disclosure.

## DETAILED DESCRIPTION OF THE EMBODIMENTS

To explain the present disclosure, exemplary embodiments of the present disclosure are described in detail below with reference to the accompanying drawings. Apparently, the described embodiments are merely some, not all, of embodiments of the present disclosure. It should be understood that, the present disclosure is not limited by the exemplary embodiments.

It should be noted that the relative arrangement of components and steps, numerical expressions, and numerical values set forth in these embodiments do not limit the scope of the present disclosure, unless otherwise specifically stated.

Overview of Disclosure

In a field of RAW image processing, luminance assessment is a fundamental and critical step, and accuracy of a result thereof directly affects effects of a subsequent series of image processing tasks such as tone mapping, auto exposure, white balance, and the like. A related luminance estimation method typically uses a fixed filter kernel (for example, a $3\times3$ mean filter or weighted average filter template) to perform convolution operations on RAW format Bayer array data, to estimate a luminance value of each pixel region.

A basic process of the method is as follows: A fixed filter template is preset (for example, a mean template with all weight coefficients being equal or a Gaussian blur template with a higher center weight value), and is used to perform calculation with a corresponding pixel in a sliding window manner on a RAW image. Weighted summation is performed on pixel values within an adjacent region (for example, a $3\times3$ window) of each pixel position based on the filter template, and a result is used as a luminance estimate value for the region. In this process, red, green, and blue color channels are typically assigned a fixed weight ratio (for example, following an empirical value of human eye sensitivity to green, a ratio of R:G:B = 0.299:0.587:0.114 is adopted for synthesis), to convert raw Bayer data into a single-channel luminance map.

Deficiency of the method lies in a "one-size-fits-all" processing mode, which fails to consider differences in image content across different regions. For example, an HVS (Human Visual System) has nonlinear luminance perception for different luminance environments and different color regions, and performs adaption based on local content. The fixed R:G:B weight ratio is an average value derived from global statistics or specific assumptions, and cannot adapt to local spectral variations in the image caused by different illumination conditions and object surface reflective properties. For example, in a scene dominated by a red object (such as red soil under sunset), a green component is dominant by default in a luminance assessment algorithm, leading to underestimation of contribution of a red channel to overall luminance. An estimated luminance value for the region is lower than visually perceived true luminance thereof. Conversely, in a scene with a large area of blue or green (such as a forest or an ocean), luminance contribution of a corresponding color may be overestimated or underestimated by using a fixed weight. Such luminance estimation that does not match local content results in a converted luminance map that cannot truly reflect scene light-dark distribution perceived by human eyes, and consequently causes subsequent processing to use biased luminance information, which cannot meet an image processing requirement.

To resolve the foregoing problems, the image luminance assessment method provided by the embodiments of the present disclosure can adaptively adjust a luminance weight based on a local feature of an image, so as to improve accuracy of luminance estimation, and further provide more accurate luminance data for other image processing tasks (for example, luminance mapping and tone mapping).

Exemplary Method

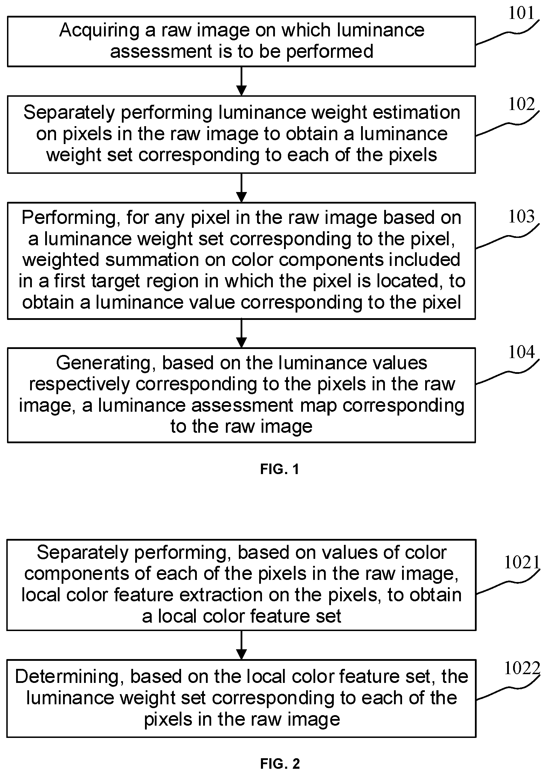

FIG. 1 is a schematic flowchart illustrating an image luminance assessment method according to an exemplary embodiment of the present disclosure. This embodiment may be applied to an electronic device. As shown in FIG. 1, the following steps are included:
Step 101: Acquiring a raw image on which luminance assessment is to be performed.

The raw image is an image including raw data acquired by a camera sensor, namely, a RAW image. In an embodiment, the RAW image may be an image acquired based on a Bayer or another CFA (Color Filter Array), where pixels of in Bayer color filter array are arranged with 50% green, 25% red, and 25% blue.

Step 102: Separately performing luminance weight estimation on pixels in the raw image to obtain a luminance weight set corresponding to each of the pixels.

Each luminance weight in the luminance weight set corresponds to one color component. For example, for a specific pixel, a luminance weight set corresponding to the pixel includes three luminance weights, corresponding to R, G, and B color components respectively.

In this embodiment, luminance weight estimation may be performed on each of the pixels in the raw image in various manners. For example, a sliding window of a fixed size may be set, and for each of the pixels in the raw image, a proportion of a sum of values of each type of color component within a sliding window corresponding to the pixel to a total sum of values of all color components within the sliding window is calculated, and a luminance weight of each type of color component corresponding to the pixel is determined based on a proportion corresponding to each type of color component.

For another example, a pre-trained convolutional neural network model may be used to perform luminance feature extraction on each of the pixels in the raw image, and subsequently, an obtained luminance feature is upsampled to obtain a luminance weight corresponding to each color component of each of the pixels.

Step 103: Performing, for any pixel in the raw image based on a luminance weight set corresponding to the pixel, weighted summation on color components included in a first target region in which the pixel is located, to obtain a luminance value corresponding to the pixel.

The first target region is an image region of a first preset size with the pixel as a reference point. The first preset size may be arbitrarily set, and is, for example, $3\times3$. A position of the reference point may be preset, for example, may be a center point of the $3\times3$ image region.

A manner of determining a value of a color component for which the weighted summation calculation is performed may be preset. For example, an average value of each type of color component within the first target region may be used as the value of the color component for which the weighted summation calculation is performed.

In an example, if a luminance weight set of a specific pixel in the raw image is expressed as R:G:B = 2:7:1, a luminance value corresponding to the pixel is expressed as lum = (2*ave_r + 7*ave_g + 1*ave_b)/10, where ave_r, ave_g, and ave_b are respectively average values of R, G, and B color components within the first target region.

Step 104: Generating, based on the luminance values respectively corresponding to the pixels in the raw image, a luminance assessment map corresponding to the raw image.

Specifically, obtained luminance values may be combined into the luminance assessment map, or processing such as downsampling and convolution may be performed on a luminance map after combination to obtain the luminance assessment map.

Based on the image luminance assessment method provided by the embodiments of the present disclosure, luminance weight estimation is separately performed on the pixels in the raw image to obtain the luminance weight set corresponding to each of the pixels, subsequently, weighted summation is performed, based on the luminance weight set corresponding to each of the pixels, on color components included in a first target region in which each of the pixels is located, to obtain the luminance value corresponding to the pixel, and finally, the luminance assessment map is generated based on the luminance values respectively corresponding to the pixels in the raw image. In this way, adaptive adjustment of luminance weights of the color components of each of the pixels is achieved based on a local luminance feature at a location of each of the pixels in the image, so that the luminance assessment map obtained by using the luminance weights can more accurately reflect scene light-dark distribution perceived by human eyes, and local luminance in the image reflected by the luminance assessment map is more consistent with visual perception characteristics of the human eyes, thereby facilitating provision of more accurate luminance assessment data and meeting a requirement for highly accurate luminance assessment maps in various image processing scenarios.

In some optional implementations, as shown in FIG. 2, step 102 includes the following:

Step 1021: Separately performing, based on values of color components of each of the pixels in the raw image, local color feature extraction on the pixels, to obtain a local color feature set.

Each local color feature in the local color feature set corresponds to one pixel in the raw image, and the local color feature represents numerical magnitudes of color components within the local region in which the corresponding pixel is located. For example, for one pixel in the raw image, statistics are performed on values of color components within the local region in which the pixel is located, and a proportion of a value of each type of color component to a sum of values of all color components in the local region is used as the local color feature. That is, the local color feature corresponding to the pixel includes three proportions, respectively corresponding to R, G, and B color components.

For another example, a pre-trained convolutional neural network model may be used to perform calculation on the raw image, and an obtained feature map is used as the local color feature set, in other words, each of the pixels in the feature map corresponds to a group of local color features, and the group of local color features includes feature values representing numerical magnitudes of R, G, and B.

Step 1022: Determining, based on the local color feature set, the luminance weight set corresponding to each of the pixels in the raw image.

Each group of local color features in the local color feature set represents magnitudes of different color components. Therefore, a luminance weight of each type of color component may be determined based on values corresponding to different color components. For example, a value corresponding to each type of color component is normalized to obtain the luminance weight of each type of color component.

In this embodiment, local color feature extraction is separately performed on the pixels in the raw image, and the luminance weight set is determined based on the obtained local color feature set, where the luminance weight set may reflect color features of different regions in the raw image, thereby facilitating accurate luminance assessment based on a difference between local regions of the raw image.

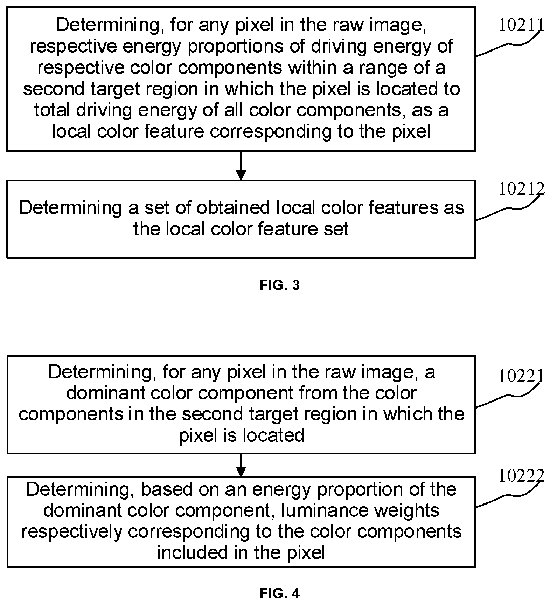

In some optional implementations, as shown in FIG. 3, step 1021 in the foregoing includes the following:

Step 10211: Determining, for any pixel in the raw image, respective energy proportions of driving energy of respective color components within a range of a second target region in which the pixel is located to total driving energy of all color components, as a local color feature corresponding to the pixel.

The foregoing driving energy is energy consumed for driving a pixel of a corresponding color to emit light, and is typically represented by a grayscale value in a range of 0 to 255. The second target region is an image region of a second preset size with the pixel as a reference point. The second preset size may be the same as or different from the foregoing first preset size, and a manner of selecting a position of the reference point may be the same as or different from the manner of selecting the position of the reference point in the foregoing first target region.

In an example, the second preset size is $3 \times 3$. In a form of a sliding window, the second target region is used as a window with a sliding step of 1, and local color features are sequentially calculated for the pixels in the raw image. Any window is used as an example. A center point of the window is the reference point, and energy proportions of red, green, and blue components of the window are respectively: $str\_r = sum\_r/(sum\_r + sum\_g + sum\_b)$; $str\_g = sum\_g/(sum\_r + sum\_g + sum\_b)$; $str\_b = sum\_b/(sum\_r + sum\_g + sum\_b)$, where $sum\_r$, $sum\_g$, and $sum\_b$ are respectively driving energy of the red, green, and blue components within the window, to be specific, sums of values of pixels marked as red, green, and blue. The calculated $str\_r$, $str\_g$, and $str\_b$ are a local color feature corresponding to the pixel serving as the reference point. A sum of the three energy proportions is 1, and the proportions may represent distribution of colors within the window.

Step 10212: Determining a set of obtained local color features as the local color feature set.

In other words, the local color features corresponding to the pixels in the raw image are combined into the local color feature set.

In this embodiment, statistics are performed on proportions of driving energy of color components within a second target region in which each of the pixels in the raw image is located, and an obtained local color feature may accurately represent energy distribution of the color components. Based on the energy distribution, it is beneficial to obtaining a luminance weight set with higher accuracy.

In some optional implementations, as shown in FIG. 4, step 1022 in the foregoing includes the following:

Step 10221: Determining, for any pixel in the raw image, a dominant color component from the color components in the second target region in which the pixel is located.

The dominant color component is a color component having a largest energy proportion in the second target region.

Step 10222: Determining, based on an energy proportion of the dominant color component, luminance weights respectively corresponding to the color components included in the pixel.

Optionally, a corresponding dominant color filter template may be set for each type of dominant color component, and the dominant color filter template includes luminance weights respectively corresponding to the color components. For example, a red filter template is expressed as r:g:b = 6:3:1, indicating that luminance weights corresponding to R, G, and B color components are respectively 0.6, 0.3, and 0.1; a green filter template is expressed as r:g:b = 2:7:1; and a blue filter template is expressed as r:g:b = 1:3:6.

In this embodiment, the dominant color component in the second target region is determined and the corresponding luminance weights are set for the dominant color component, so that more targeted setting of luminance weights for the color components may be performed based on color features of different regions in the raw image. In this way, the luminance assessment map may more accurately reflect a color difference between different regions in the raw image.

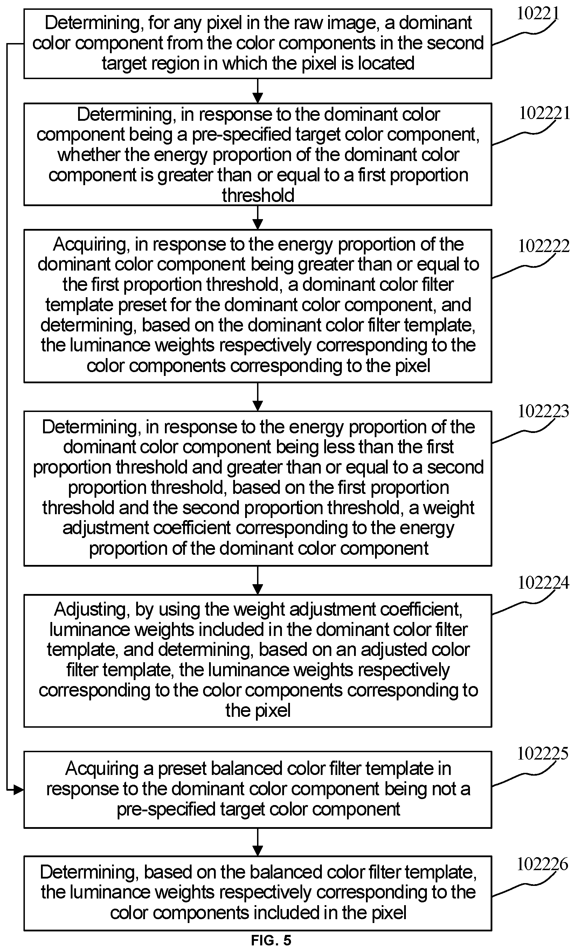

In some optional implementations, as shown in FIG. 5, step 10222 includes the following:

Step 102221: Determining, in response to the dominant color component being a pre-specified target color component, whether the energy proportion of the dominant color component is greater than or equal to a first proportion threshold.

The target color component and the first proportion threshold may be preset. For example, the target color component is an R (Red) component and a B (Blue) component, and the first proportion threshold is 0.7. That is, if the dominant color component is the R component or the B component, it is further determined whether an energy proportion str_r corresponding to the R component or an energy proportion str_b corresponding to the B component is greater than or equal to 0.7.

Step 102222: Acquiring, in response to the energy proportion of the dominant color component being greater than or equal to the first proportion threshold, a dominant color filter template preset for the dominant color component, and determining, based on the dominant color filter template, the luminance weights respectively corresponding to the color components corresponding to the pixel.

Still referring to the foregoing example, if the dominant color component is red, and str_r ≥ 0.7, the dominant color filter template is an R-dominant filter template. The template assigns a higher weight to the red component and reduces weights of the green and blue components. For example, an R, G, B color component weight ratio of the R-dominant filter template is 6:3:1, respectively corresponding to luminance weights of 0.6, 0.3, and 0.1. The template is designed specifically for a scene in which red is dominant.

If the dominant color component is blue, and str_b ≥ 0.7, the dominant color filter template is a B-dominant filter template. The template assigns a higher weight to the blue component and reduces weights of the green and red components. For example, an R, G, B color component weight ratio of the B-dominant filter template is 1:3:6, respectively corresponding to luminance weights of 0.1, 0.3, and 0.6. The template is designed specifically for a scene in which blue is dominant.

Step 102223: Determining, in response to the energy proportion of the dominant color component being less than the first proportion threshold and greater than or equal to a second proportion threshold, based on the first proportion threshold and the second proportion threshold, a weight adjustment coefficient corresponding to the energy proportion of the dominant color component.

The second proportion threshold may be preset, for example, the second proportion threshold is 0.5.

Still referring to the foregoing example, if the dominant color component is red or blue, and $0.5 \leq str\_r < 0.7$ or $0.5 \leq str\_b < 0.7$, a weight adjustment coefficient corresponding to the R component or the B component may be further determined.

The weight adjustment coefficient may be calculated based on a preset calculation formula by performing calculation on an energy proportion of a current dominant color component together with the first proportion threshold and the second proportion threshold. For example, if the dominant color component is the R component, a formula for calculating a corresponding weight adjustment coefficient $\alpha$ is as follows:

$$\alpha = \frac{str\_r - 0.5}{0.7 - 0.5} \quad (1)$$

If the dominant color component is the B component, a formula for calculating a corresponding weight adjustment coefficient $\beta$ is as follows:

$$\beta = \frac{str\_b - 0.5}{0.7 - 0.5} \quad (2)$$

Step 102224: Adjusting, by using the weight adjustment coefficient, luminance weights included in the dominant color filter template, and determining, based on an adjusted color filter template, the luminance weights respectively corresponding to the color components corresponding to the pixel.

After obtaining the weight adjustment coefficient, luminance weights included in the dominant color filter template may be separately adjusted by using the weight adjustment coefficient. For example, the luminance weights included in the dominant color filter template may be multiplied by the weight adjustment coefficient, and then respectively added to luminance weights of corresponding color components in a preset reference template, to obtain an adjusted color filter template. Luminance weights respectively corresponding to color components of one pixel may be determined based on a weight ratio of color components in the adjusted color filter template.

In this embodiment, when intensity of a specific dominant color component is excessively high, luminance weights are determined by using a corresponding dominant color filter template, so that luminance assessment may be adaptively performed for dominant color local regions, thereby improving regional pertinence of luminance assessment. When intensity of a dominant color component is moderate ($0.5 \leq str\_r < 0.7$, or $0.5 \leq str\_b < 0.7$), it indicates that a pixel on which luminance estimation is currently performed is located in a transition zone between dominant color regions (for example, between a red-dominant region and a blue-dominant region). In the zone, luminance weights in a final color filter template are determined after adjustment based on the dominant color filter template, and a weight adjustment coefficient is determined by intensity of a dominant color component, so that abrupt jumps in luminance weights at region boundaries are avoided, thereby improving accuracy of luminance estimation.

In some optional implementations, step 102224 in the foregoing may be performed as follows:

First, a preset balanced color filter template is acquired.

The balanced color filter template indicates relatively uniform energy distribution of the color components. Typically, since green pixels are naturally more numerous in a Bayer format RAW image, a filter template with a green color as the dominant color component is used as a balanced color filter template. For example, an R, G, B color component weight ratio of the balanced color filter template is 2:7:1. The template maintains a higher weight for a green component while keeping a weight ratio of red and blue channels moderate, and aims to process regions with relatively balanced color distribution.

Subsequently, weighted summation is performed, by using the weight adjustment coefficient, on luminance weights respectively included in the dominant color filter template and the balanced color filter template, to obtain the adjusted color filter template.

Specifically, if the dominant color component is the R component, a weighted summation formula is as follows:

$$w\_final = \alpha * w\_red + (1 - \alpha) * w\_blance \quad (3)$$

w_red represents the R-dominant filter template, w_balance represents the balanced color filter template, and $\alpha$ represents the weight adjustment coefficient. This formula means that for two luminance weights corresponding to a same color in the two templates, weighted summation is performed on the two luminance weights. For example, a luminance weight of the R component in w_red is multiplied by $\alpha$, and a luminance weight of the R component in w_balance is multiplied by $(1 - \alpha)$, and the two products are then added to obtain a luminance weight of the R component in the adjusted color filter template.

Similarly, if the dominant color component is the B component, and $\beta$ represents a corresponding weight adjustment coefficient, a weighted summation formula is as follows:

$$w\_final = \beta * w\_blue + (1 - \beta) * w\_blance \quad (4)$$

In this embodiment, smooth interpolation of luminance weights of color-balanced regions is achieved through the balanced color filter template and the weight adjustment coefficient, so that smooth transition may be performed on luminance values between dominant color regions (for example, between a red-dominant region and a blue-dominant region), thereby avoiding luminance jumps, and further improving accuracy of luminance assessment.

In some optional implementations, as shown in FIG. 5, step 10222 includes the following:

Step 102225: Acquiring a preset balanced color filter template in response to the dominant color component being not a pre-specified target color component.

For example, if target colors are red and blue, and a dominant color is green, a filter template with the green component as the dominant color component (a G-dominant filter template) may be acquired as the balanced color filter template. For description of the balanced color filter template, reference may be made to the embodiment.

Step 102226: Determining, based on the balanced color filter template, the luminance weights respectively corresponding to the color components included in the pixel.

Luminance weights respectively corresponding to color components of one pixel may be determined based on a weight ratio of color components in the balanced color filter template. For example, an R, G, B weight ratio of the balanced color filter template is 2:7:1, respectively corresponding to luminance weights of 0.2, 0.7, and 0.1.

In this embodiment, when the dominant color component is not a target color component, the luminance weights are determined by directly using the balanced color filter template, without requiring further determining of a value of the dominant color component, thereby achieving balanced luminance assessment based on color features of a specific dominant color region, and improving efficiency and accuracy of luminance assessment.

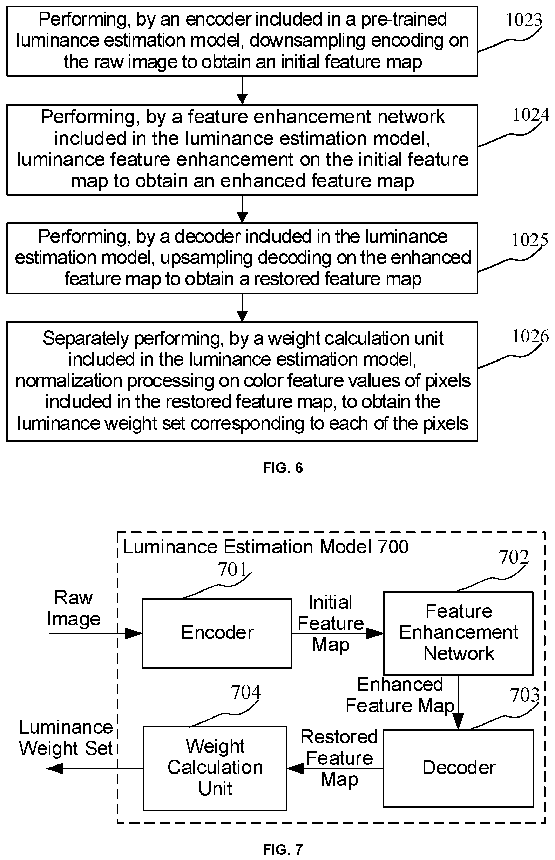

In some optional implementations, as shown in FIG. 6, step 102 includes the following:

Step 1023: Performing, by an encoder included in a pre-trained luminance estimation model, downsampling encoding on the raw image to obtain an initial feature map.

The luminance estimation model may be a model constructed based on neural networks of various structures. As shown in FIG. 7, a luminance estimation model 700 may include an encoder 701, a feature enhancement network 702, a decoder 703, and a weight calculation unit 704.

The encoder may be constructed through a convolutional neural network (including a series of convolutional layers). The encoder may perform layer-by-layer convolution on an input raw image, progressively reducing spatial resolution of the image while increasing a number of channels, to obtain a multi-scale and hierarchical initial feature map.

Step 1024: Performing, by a feature enhancement network included in the luminance estimation model, luminance feature enhancement on the initial feature map to obtain an enhanced feature map.

The feature enhancement network is used to perform feature enhancement on the initial feature map, may be constructed based on a related neural network model, and for example, may be constructed by stacking multiple deformable Transformer blocks. The stacked deformable Transformer blocks can implement a deformable self-attention mechanism. The deformable self-attention mechanism can adaptively focus compute resources on regions that are more important for luminance assessment (such as an object edge, a texture-rich region, and a large monochromatic region) based on image content, rather than mechanically processing the entire image, thereby greatly enhancing adaptability of the model to a complex scene and irregular local content.

Step 1025: Performing, by a decoder included in the luminance estimation model, upsampling decoding on the enhanced feature map to obtain a restored feature map.

Resolution of the restored feature map is the same as resolution of the raw image, and pixels in the restored feature map respectively correspond to a preset number of color feature values. The preset number herein may be the same as a number of color components. For example, each pixel in the restored feature map includes color feature values respectively corresponding to R, G, and B color components. A magnitude of the color feature value may reflect a magnitude of driving energy required by each type of color component.

The foregoing decoder may be implemented based on decoding of a related feature map. For example, a deconvolution decoder is used for upsampling, progressively restoring spatial resolution of the image, to obtain a restored feature map with same resolution as that of the raw image. Optionally, to avoid loss of detail information during the downsampling and upsampling processes, skip connections may be introduced between corresponding levels of the decoder and the encoder. These connections directly transfer fine details captured during an encoding stage to a decoding stage, thereby ensuring that a finally output restored feature map may preserve detail features in the raw image.

Step 1026: Separately performing, by a weight calculation unit included in the luminance estimation model, normalization processing on the color feature values of the pixels included in the restored feature map, to obtain the luminance weight set corresponding to each of the pixels.

Specifically, the restored feature map input to the weight calculation unit is a three-dimensional feature map having a same size as that of the input raw image and having R, G, and B color components. Values of three channels of the restored feature map are arbitrary real numbers, do not possess a clear physical meaning, and cannot be directly used for calculation. Therefore, the weight calculation unit is provided herein to perform normalization processing on the color components of the restored feature map.

In an example, normalization processing may be performed by using a Softmax function. The Softmax function considers values of three channels of each of the pixels as a set of unnormalized scores and converts the values into probability distribution that sums to 1. After processed by the Softmax function, at each pixel position, output values of three channels no longer represent original intensity, but respectively represent weights or proportions of contributions of R, G, and B channels to final luminance of the point. Since it is probability distribution, the proportional luminance weights are adaptive, in other words, magnitudes of the weights are dynamically determined by a network based on image content (such as an edge and a texture). For example, in a green vegetation region, the G channel may be assigned a higher weight; while in a red object region, a weight of the R channel is higher.

It is assumed that three color feature values of a specific pixel in the restored feature map are $z_r = 3$, $z_g = 1$, $z_b = 0.2$. A process of applying the Softmax function to calculate luminance weights respectively corresponding to R, G, and B of the pixel is as follows:

First, exponential calculation is performed:

$$e^{z_r} = e^3 \approx 20.0855$$

$$e^{z_g} = e^1 \approx 2.7183$$

$$e^{z_b} = e^{0.2} \approx 1.2214$$

Subsequently, an exponential sum is calculated:

$$S = 20.0855 + 2.7183 + 1.2214 = 24.0252$$

Finally, normalization is performed to obtain the luminance weights:

$$w_r = \frac{20.0855}{24.0252} = 0.836$$

$$w_g = \frac{2.7183}{24.0252} = 0.113$$

$$w_b = \frac{1.2214}{24.0252} = 0.051$$

For the pixel, a ratio of color components adaptively allocated by the weight calculation unit is R:G:B ≈ 0.836:0.113:0.051. The ratio meets a condition of 0.836 + 0.113 + 0.051 = 1, numerical values in the ratio are the luminance weights respectively corresponding to R, G, and B, and a set of the luminance weights is a luminance weight set corresponding to the pixel.

In this embodiment, the luminance estimation model is constructed to achieve adaptive setting of luminance weight sets for pixels in different regions of a raw image based on color distribution characteristics of each region in the image, and the luminance estimation model can directly learn a complex mapping relationship required for luminance assessment from raw data. A luminance assessment map generated based on a luminance weight set output by the model can reflect details of different regions in the raw image in a more targeted manner, thereby further improving accuracy and a scene generalization capability of luminance assessment.

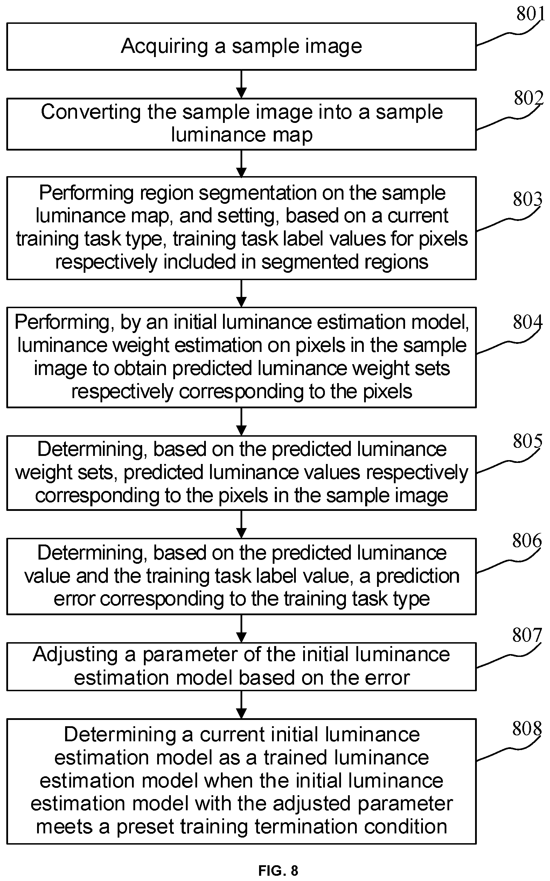

In some optional implementations, as shown in FIG. 8, a luminance estimation model is pre-trained based on the following steps:
Step 801: Acquiring a sample image.

The sample image is an image of a same type as the raw image in the foregoing embodiments, for example, a RAW image captured by a camera.

Step 802: Converting the sample image into a sample luminance map.

A luminance map conversion manner based on a fixed R, G, B ratio may be adopted to obtain the sample luminance map. The sample luminance map serves as a basis for luminance estimation.

Step 803: Performing region segmentation on the sample luminance map, and setting, based on a current training task type, training task label values for pixels respectively included in segmented regions.

The region segmentation may be manually completed, or may be automatically performed based on a related image segmentation method, to mark out regions such as a large monochromatic region and a region with a prominent edge feature in the sample luminance map.

Pixels in different regions of the segmented sample luminance map have corresponding training task label values. The training task label values are annotated reference values, and are used for error comparison with actual predicted values after subsequent prediction tasks are performed. Setting of the training task label values is typically manually performed. For example, a luminance value of a specific region is adjusted based on manual experience, and the training task label values are luminance label values of pixels in the region, reflecting a luminance value that the model is expected to output.

Step 804: Performing, by an initial luminance estimation model, luminance weight estimation on pixels in the sample image to obtain predicted luminance weight sets respectively corresponding to the pixels.

A specific execution process of performing luminance weight estimation on the pixels in the sample image may refer to step 1023 to step 1026 in the foregoing.

Step 805: Determining, based on the predicted luminance weight sets, predicted luminance values respectively corresponding to the pixels in the sample image.

An execution process of determining the predicted luminance values may refer to step 103 in the foregoing.

Step 806: Determining, based on the predicted luminance value and the training task label value, a prediction error corresponding to the training task type.

Specifically, a related loss function (for example, an L1 loss function) may be set to calculate a loss value representing an error between the predicted luminance value and the training task label value.

Step 807: Adjusting a parameter of the initial luminance estimation model based on the error.

Specifically, a machine learning method may be adopted to adjust the parameter of the initial luminance estimation model through backpropagation and gradient descent, to gradually reduce the foregoing error.

Step 808: Determining a current initial luminance estimation model as a trained luminance estimation model when the initial luminance estimation model with the adjusted parameter meets a preset training termination condition.

The preset training termination condition may include, but is not limited to, at least one of the following: convergence of the loss value, training duration reaching preset duration, and a number of training times reaching a preset number of times.

In this embodiment, efficient acquisition of training sample data is achieved by performing region segmentation on the sample luminance map and setting the training task label values in advance, and a more targeted luminance estimation model is trained for an actual application scenario, which is beneficial to improving efficiency and accuracy of luminance estimation.

In some optional implementations, step 803 may include the following:

In response to the training task type being a luminance value prediction task, luminance label values are set for the pixels respectively included in the segmented regions.

Typically, the luminance label values may be set in a manual input manner, in other words, luminance values of specific regions in the sample luminance map are adjusted for these regions based on manual experience so that the regions more closely conform to subjective perception of human eyes. Finally, a high-precision luminance map is obtained as a truth label for supervised learning.

In response to the training task type being a visual perception task, perception label values are set for the pixels respectively included in the segmented regions.

Specifically, if the luminance estimation model is applied to a specific high-level visual task (such as object detection or image classification), during training, a luminance map generated based on a luminance weight set output by the model may be directly output to a downstream perception network, and a perception label value (such as a detection box or a category label) is used to calculate losses, to perform joint training of the luminance estimation model and the downstream perception network. This manner can guide the luminance estimation model to generate a luminance weight set most favorable for the visual perception task, and further generate a luminance map most favorable for the visual perception task.

Step 806 may include the following:
In response to the training task type being the luminance value prediction task, an error between the predicted luminance value and the luminance label value is determined by a preset first loss function.

The first loss function may be a regression loss function, for example, an L1 loss function. A luminance estimation model trained based on the error between the predicted luminance value and the luminance label value may generate a high-precision luminance map.

In response to the training task type being the visual perception task, image perception prediction is performed by a preset perception network based on the predicted luminance value to obtain a perception prediction result; and an error between the perception prediction result and the perception label value is determined by a preset second loss function.

The second loss function may be a loss function for classification, for example, a cross-entropy loss function. The foregoing perception prediction result corresponds to the perception label value, namely, a target detection box, a target category, or the like obtained by performing visual perception by using an actually generated luminance map.

A luminance estimation model trained based on the error between the perception prediction result and the perception label value may generate a luminance map favorable for the visual perception task.

In this embodiment, targeted training is achieved based on different application scenarios of the luminance estimation model by setting label values for different training tasks, thereby enabling accuracy of luminance assessment by the model in a specific scenario to be higher.

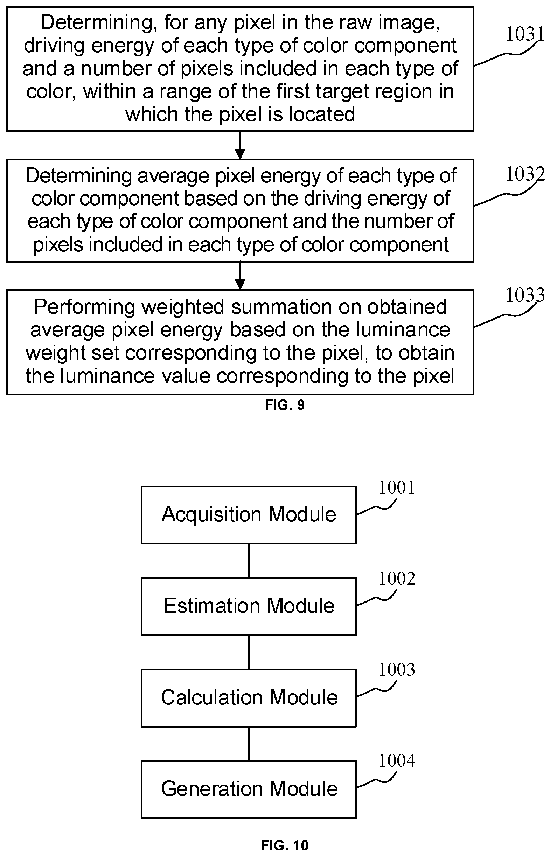

In some optional implementations, as shown in FIG. 9, step 103 includes the following:
Step 1031: Determining, for any pixel in the raw image, driving energy of each type of color component and a number of pixels included in each type of color, within a range of the first target region in which the pixel is located.

The foregoing driving energy is energy consumed for driving a pixel of a corresponding color to emit light, and is typically represented by a grayscale value in a range of 0 to 255. For R, G, and B color components within a current first target region, numbers of pixels of all types of color components are respectively expressed as num_r, num_g, and num_b.

Step 1032: Determining average pixel energy of each type of color component based on the driving energy of each type of color component and the number of pixels included in each type of color component.

In an example, for the R, G, and B color components within the current first target region, average pixel energy of the R component is expressed as ave_r = sum_r/num_r; an average value of the G component is expressed as ave_g = sum_g/num_g; and an average value of the B component is expressed as ave_b = sum_b/num_b, where sum_r, sum_g, and sum_b are respectively sums of driving energy of the R, G, and B color components.

Step 1033: Performing weighted summation on obtained average pixel energy based on the luminance weight set corresponding to the pixel, to obtain the luminance value corresponding to the pixel.

In an example, if a ratio of luminance weights corresponding to the pixel is 2:7:1, a luminance value corresponding to the pixel is lum = (2*ave_r + 7*ave_g + 1*ave_b)/10.

In this embodiment, the luminance value is obtained by performing weighted summation by using the luminance weight set and the average pixel energy of each type of color component, so that an adjusted luminance value of each of the pixels may reflect a luminance feature of a surrounding region, thereby enabling the luminance assessment map to more accurately reflect a luminance difference between regions of the raw image.

Exemplary apparatus

FIG. 10 is a diagram illustrating a structure of an image luminance assessment apparatus according to an exemplary embodiment of the present disclosure. This embodiment may be applied to an electronic device. As shown in FIG. 10, the image luminance assessment apparatus includes: an acquisition module 1001, configured for acquiring a raw image on which luminance assessment is to be performed; an estimation module 1002, configured for separately performing luminance weight estimation on pixels in the raw image to obtain a luminance weight set corresponding to each of the pixels, where each luminance weight in the luminance weight set corresponds to one color component; a calculation module 1003, configured for performing, for any pixel in the raw image based on a luminance weight set corresponding to the pixel, weighted summation on color components included in a first target region in which the pixel is located, to obtain a luminance value corresponding to the pixel, where the first target region is an image region of a first preset size with the pixel as a reference point; and a generation module 1004, configured for generating, based on the luminance values respectively corresponding to the pixels in the raw image, a luminance assessment map corresponding to the raw image.

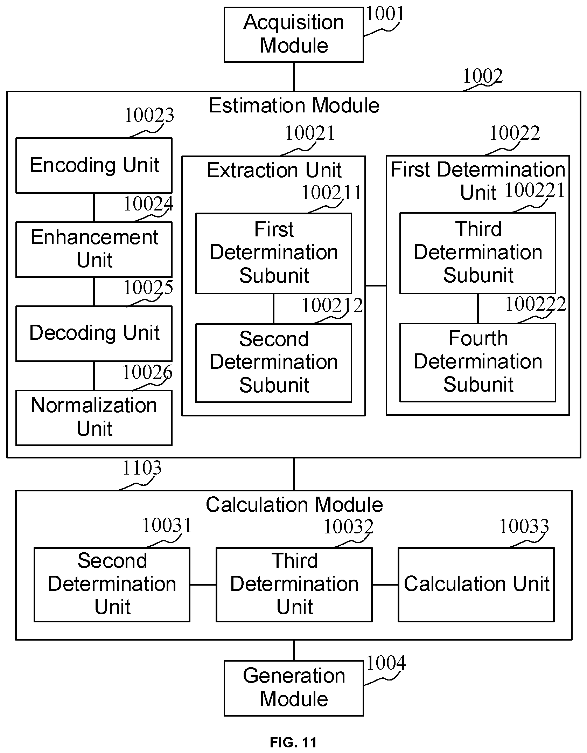

Referring to FIG. 11, FIG. 11 is a diagram illustrating a structure of an image luminance assessment apparatus according to another exemplary embodiment of the present disclosure.

In some optional implementations, the estimation module 1002 includes: an extraction unit 10021, configured for separately performing, based on values of color components of each of the pixels in the raw image, local color feature extraction on the pixels, to obtain a local color feature set; and a first determination unit 10022, configured for determining, based on the local color feature set, a luminance weight set corresponding to each of the pixels in the raw image respectively.

In some optional implementations, the extraction unit 10021 includes: a first determination subunit 100211, configured for determining, for any pixel in the raw image, respective energy proportions of driving energy of respective color components within a range of a second target region in which the pixel is located to total driving energy of all color components, as a local color feature corresponding to the pixel, where the second target region is an image region of a second preset size with the pixel as a reference point; and a second determination subunit 100212, configured for determining a set of obtained local color features as the local color feature set.

In some optional implementations, the first determination unit 10022 includes: a third determination subunit 100221, configured for determining, for any pixel in the raw image, a dominant color component from the color components in the second target region in which the pixel is located, where the dominant color component is a color component having a largest energy proportion in the second target region; and a fourth determination subunit 100222, configured for determining, based on an energy proportion of the dominant color component, luminance weights respectively corresponding to the color components included in the pixel.

In some optional implementations, the fourth determination subunit 100222 is further configured for: determining, in response to the dominant color component being a pre-specified target color component, whether the energy proportion of the dominant color component is greater than or equal to a first proportion threshold; acquiring, in response to the energy proportion of the dominant color component being greater than or equal to the first proportion threshold, a dominant color filter template preset for the dominant color component, and determining, based on the dominant color filter template, the luminance weights respectively corresponding to the color components corresponding to the pixel; or determining, in response to the energy proportion of the dominant color component being less than the first proportion threshold and greater than or equal to a second proportion threshold, based on the first proportion threshold and the second proportion threshold, a weight adjustment coefficient corresponding to the energy proportion of the dominant color component; and adjusting, by using the weight adjustment coefficient, luminance weights included in the dominant color filter template, and determining, based on an adjusted color filter template, the luminance weights respectively corresponding to the color components corresponding to the pixel.

In some optional implementations, the fourth determination subunit 100222 is further configured for: acquiring a preset balanced color filter template; and performing, by using the weight adjustment coefficient, weighted summation on luminance weights respectively included in the dominant color filter template and the balanced color filter template, to obtain the adjusted color filter template.

In some optional implementations, the fourth determination subunit 100222 is further configured for acquiring a preset balanced color filter template in response to the dominant color component being not a pre-specified target color component; and determining, based on the balanced color filter template, the luminance weights respectively corresponding to the color components included in the pixel.

In some optional implementations, the estimation module 1002 includes: an encoding unit 10023, configured for performing, by an encoder included in a pre-trained luminance estimation model, downsampling encoding on the raw image to obtain an initial feature map; an enhancement unit 10024, configured for performing, by a feature enhancement network included in the luminance estimation model, luminance feature enhancement on the initial feature map to obtain an enhanced feature map; a decoding unit 10025, configured for performing, by a decoder included in the luminance estimation model, upsampling decoding on the enhanced feature map to obtain a restored feature map, where resolution of the restored feature map is the same as resolution of the raw image, and pixels in the restored feature map respectively correspond to a preset number of color feature values; and a normalization unit 10026, configured for performing, by a weight calculation unit included in the luminance estimation model, normalization processing on the color feature values of the pixels included in the restored feature map, to obtain the luminance weight set corresponding to each of the pixels.

In some optional implementations, the luminance estimation model is pre-trained based on the following steps: acquiring a sample image; converting the sample image into a sample luminance map; performing region segmentation on the sample luminance map, and setting, based on a current training task type, training task label values for pixels respectively included in segmented regions; performing, by an initial luminance estimation model, luminance weight estimation on pixels in the sample image to obtain predicted luminance weight sets respectively corresponding to the pixels; determining, based on the predicted luminance weight sets, predicted luminance values respectively corresponding to the pixels in the sample image; determining, based on the predicted luminance value and the training task label value, a prediction error corresponding to the training task type; adjusting a parameter of the initial luminance estimation model based on the error; and determining a current initial luminance estimation model as a trained luminance estimation model when the initial luminance estimation model with the adjusted parameter meets a preset training termination condition.

In some optional implementations, the setting, based on a current training task type, training task label values for pixels respectively included in the segmented regions includes: setting, in response to the training task type being a luminance value prediction task, luminance label values for the pixels respectively included in the segmented regions; or setting, in response to the training task type being a visual perception task, perception label values for the pixels respectively included in the segmented regions; and the determining, based on the predicted luminance value and the training task label value, a prediction error corresponding to the training task type includes: determining, in response to the training task type being the luminance value prediction task, an error between the predicted luminance value and the luminance label value by a preset first loss function; or performing, in response to the training task type being the visual perception task, image perception prediction by a preset perception network based on the predicted luminance value to obtain a perception prediction result; and determining an error between the perception prediction result and the perception label value by a preset second loss function.

In some optional implementations, the calculation module 1003 includes: a second determination unit 10031, configured for determining, for any pixel in the raw image, driving energy of each type of color component and a number of pixels included in each type of color, within a range of the first target region in which the pixel is located; a third determination unit 10032, configured for determining average pixel energy of each type of color component based on the driving energy of each type of color component and the number of pixels included in each type of color component; and a calculation unit 10033, configured for performing weighted summation on obtained average pixel energy based on the luminance weight set corresponding to the pixel, to obtain the luminance value corresponding to the pixel.

The exemplary apparatus embodiment corresponds to the above exemplary method section in terms of implementation, and the two can be cross-referenced, combined, and cited in corresponding content. This is not repeated herein. For beneficial technical effects corresponding to the exemplary embodiment of this apparatus, refer to the corresponding beneficial technical effects of the exemplary method section described above, which are not repeated herein.

Exemplary Electronic Device

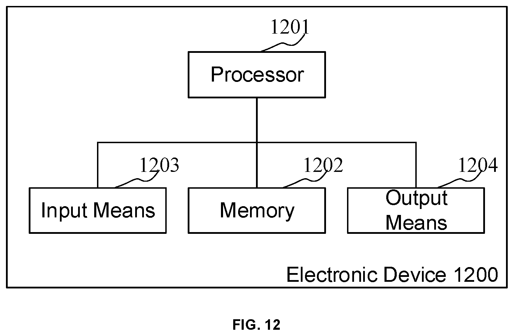

FIG. 12 is a diagram illustrating a structure of an electronic device 1200 according to an embodiment of the present disclosure. The electronic device 1200 includes at least one processor 1201 and a memory 1202.

The processor 1201 may be a CPU (Central Processing Unit) or another form of processing unit having a data processing capability and/or an instruction execution capability, and may control another component in the electronic device 1200 to perform a desired function.

The memory 1202 may include one or more computer program products. The computer program product may include various forms of computer readable storage media, for example, a volatile memory and/or a nonvolatile memory. The volatile memory may include, for example, a RAM (Random Access Memory) and/or a cache. The non-volatile memory may include, for example, a ROM (Read-Only Memory), a hard disk, or a flash memory. The computer readable storage medium may store one or more computer program instructions. The processor 1201 may run the one or more computer program instructions to implement the image luminance assessment method and/or other desired functions of the above embodiments of the present disclosure.

In an example, the electronic device 1200 may further include an input means 1203 and an output means 1204. The components are interconnected through a bus system and/or other forms of connection mechanisms (not shown).

The input means 1203 may further include, for example, a keyboard or a mouse.

The output means 1204 may output various information to the outside, and may include, for example, a display, a loudspeaker, a printer, and a communication network and a remote output device connected thereto.

Certainly, for simplicity, only some components in the electronic device 1200 that are related to the present disclosure are shown in FIG. 12, and components such as a bus and an input/output interface are omitted. Besides, the electronic device 1200 may further include any other appropriate components depending on specific applications.

Exemplary Computer Program Product And Computer Readable Storage Medium

In addition to the foregoing methods and devices, the embodiments of the present disclosure may also provide a computer program product including computer program instructions that, when run by a processor, cause the processor to perform the steps of the image luminance assessment method according to the embodiments of the present disclosure that is described in the above "Exemplary Method" section.

The computer program product may be program code, written with one or any combination of a plurality of programming languages, which is configured for performing the operations in the embodiments of the present disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of the present disclosure may further related to a computer readable storage medium, on which computer program instructions are stored. The computer program instructions, when run by a processor, cause the processor to perform the steps of the image luminance assessment method of the embodiments of the present disclosure that is described in the above "Exemplary Method" section.

The computer readable storage medium may be one readable medium or any combination of a plurality of readable media. The readable medium may be a readable signal medium or a readable storage medium. The readable storage medium includes, for example, but is not limited to electrical, magnetic, optical, electromagnetic, infrared, or semiconductor systems, apparatuses, or devices, or any combination of the above. More specific examples (a non-exhaustive list) of the readable storage medium include: an electrical connection with one or more conducting wires, a portable disk, a hard disk, a RAM, a ROM, an erasable programmable ROM (EPROM or a flash memory), an optical fiber, a portable compact disk ROM (CD-ROM), an optical storage device, a magnetic storage device, or any suitable combination of the above.

Basic principles of the present disclosure are described above in combination with specific embodiments. However, the advantages, superiorities, effects, and the like mentioned in the present disclosure are merely examples rather than limitations, and it should not be considered that these advantages, superiorities, effects, and the like are necessary for each of the embodiments of the present disclosure. In addition, specific details disclosed above are merely for examples and for easy of understanding, rather than limitations. The details described above do not limit that the present disclosure must be implemented by using the foregoing specific details.

A person skilled in the art may make various modifications and variations to the present disclosure without departing from the spirit and scope of this application. The present disclosure is intended to cover these modifications and variations of this application provided that they fall within the scope of protection defined by the claims of the present disclosure or equivalents thereof.

**Claims**

1. An image luminance assessment method, comprising:

    acquiring (101) a raw image on which luminance assessment is to be performed;
    separately performing (102) luminance weight estimation on pixels in the raw image to obtain a luminance weight set corresponding to each of the pixels, wherein each luminance weight in the luminance weight set corresponds to one color component;
    performing (103), for any pixel in the raw image based on a luminance weight set corresponding to the pixel, weighted summation on color components comprised in a first target region in which the pixel is located, to obtain a luminance value corresponding to the pixel, wherein the first target region is an image region of a first preset size with the pixel as a reference point; and
    generating (104), based on the luminance values respectively corresponding to the pixels in the raw image, a luminance assessment map corresponding to the raw image.

2. The method according to claim 1, wherein the separately performing (102) luminance weight estimation on pixels in the raw image to obtain a luminance weight set corresponding to each of the pixels comprises:

    separately performing (1021), based on values of color components of each of the pixels in the raw image, local color feature extraction on the pixels, to obtain a local color feature set; and determining (1022), based on the local color feature set, the luminance weight set corresponding to each of the pixels in the raw image.

3. The method according to claim 2, wherein the separately performing (1021), based on values of color components of each of the pixels in the raw image, local color feature extraction on the pixels, to obtain a local color feature set comprises:

determining (10211), for any pixel in the raw image, respective energy proportions of driving energy of respective color components within a range of a second target region in which the pixel is located to total driving energy of all color components, as a local color feature corresponding to the pixel, wherein the second target region is an image region of a second preset size with the pixel as a reference point; and determining (10212) a set of obtained local color features as the local color feature set.

4. The method according to claim 3, wherein the determining (1022), based on the local color feature set, the luminance weight set corresponding to each of the pixels in the raw image comprises:

determining (10221), for any pixel in the raw image, a dominant color component from the color components in the second target region in which the pixel is located, wherein the dominant color component is a color component having a largest energy proportion in the second target region; and determining (10222), based on an energy proportion of the dominant color component, luminance weights respectively corresponding to the color components comprised in the pixel.

5. The method according to claim 4, wherein the determining (10222), based on an energy proportion of the dominant color component, luminance weights respectively corresponding to the color components comprised in the pixel comprises:

determining (102221), in response to the dominant color component being a pre-specified target color component, whether the energy proportion of the dominant color component is greater than or equal to a first proportion threshold; acquiring (102222), in response to the energy proportion of the dominant color component being greater than or equal to the first proportion threshold, a dominant color filter template preset for the dominant color component, and determining, based on the dominant color filter template, the luminance weights respectively corresponding to the color components corresponding to the pixel; or determining (102223), in response to the energy proportion of the dominant color component being less than the first proportion threshold and greater than or equal to a second proportion threshold, based on the first proportion threshold and the second proportion threshold, a weight adjustment coefficient corresponding to the energy proportion of the dominant color component; and adjusting (102224), by using the weight adjustment coefficient, luminance weights comprised in the dominant color filter template, and determining, based on an adjusted color filter template, the luminance weights respectively corresponding to the color components corresponding to the pixel.

6. The method according to claim 5, wherein the adjusting (102224), by using the weight adjustment coefficient, luminance weights comprised in the dominant color filter template comprises:

acquiring a preset balanced color filter template; and performing, by using the weight adjustment coefficient, weighted summation on luminance weights respectively comprised in the dominant color filter template and the balanced color filter template, to obtain the adjusted color filter template.

7. The method according to claim 4, wherein the determining (10222), based on an energy proportion of the dominant color component, luminance weights respectively corresponding to the color components comprised in the pixel comprises:

acquiring (102225) a preset balanced color filter template in response to the dominant color component being not a pre-specified target color component; and determining (102226), based on the balanced color filter template, the luminance weights respectively corresponding to the color components comprised in the pixel.

8. The method according to claim 1, wherein the separately performing (102) luminance weight estimation on pixels in the raw image to obtain a luminance weight set corresponding to each of the pixels comprises:

performing (1023), by an encoder comprised in a pre-trained luminance estimation model, downsampling encoding on the raw image to obtain an initial feature map;

performing (1024), by a feature enhancement network comprised in the luminance estimation model, luminance feature enhancement on the initial feature map to obtain an enhanced feature map;

performing (1025), by a decoder comprised in the luminance estimation model, upsampling decoding on the enhanced feature map to obtain a restored feature map, wherein resolution of the restored feature map is the same as resolution of the raw image, and pixels in the restored feature map respectively correspond to a preset number of color feature values; and

separately performing (1026), by a weight calculation unit comprised in the luminance estimation model, normalization processing on the color feature values of the pixels comprised in the restored feature map, to obtain the luminance weight set corresponding to each of the pixels.

9. The method according to claim 8, wherein the luminance estimation model is pre-trained through:

acquiring (801) a sample image;

converting (802) the sample image into a sample luminance map;

performing (803) region segmentation on the sample luminance map, and setting, based on a current training task type, training task label values for pixels respectively comprised in segmented regions;

performing (804), by an initial luminance estimation model, luminance weight estimation on pixels in the sample image to obtain predicted luminance weight sets respectively corresponding to the pixels;

determining (805), based on the predicted luminance weight sets, predicted luminance values respectively corresponding to the pixels in the sample image;

determining (806), based on the predicted luminance value and the training task label value, a prediction error corresponding to the training task type;

adjusting (807) a parameter of the initial luminance estimation model based on the error; and

determining (808) a current initial luminance estimation model as a trained luminance estimation model when the initial luminance estimation model with the adjusted parameter meets a preset training termination condition.

10. The method according to claim 9, wherein the setting, based on a current training task type, training task label values for pixels respectively comprised in segmented regions comprises:

setting, in response to the training task type being a luminance value prediction task, luminance label values for the pixels respectively comprised in the segmented regions; or

setting, in response to the training task type being a visual perception task, perception label values for the pixels respectively comprised in the segmented regions; and

the determining, based on the predicted luminance value and the training task label value, a prediction error corresponding to the training task type comprises:

determining, in response to the training task type being the luminance value prediction task, an error between the predicted luminance value and the luminance label value by a preset first loss function; or

performing, in response to the training task type being the visual perception task, image perception prediction by a preset perception network based on the predicted luminance value to obtain a perception prediction result; and

determining an error between the perception prediction result and the perception label value by a preset second loss function.

11. The method according to any one of claims 1 to 10, wherein the performing (103), for any pixel in the raw image based on a luminance weight set corresponding to the pixel, weighted summation on color components comprised in a first target region in which the pixel is located, to obtain a luminance value corresponding to the pixel comprises:

determining (1031), for any pixel in the raw image, driving energy of each type of color component and a number of pixels comprised in each type of color, within a range of the first target region in which the pixel is located;

determining (1032) average pixel energy of each type of color component based on the driving energy of each type of color component and the number of pixels comprised in each type of color component; and

performing (1033) weighted summation on obtained average pixel energy based on the luminance weight set corresponding to the pixel, to obtain the luminance value corresponding to the pixel.

12. An image luminance assessment apparatus, comprising:

an acquisition module (1001), configured for acquiring a raw image on which luminance assessment is to be performed;

an estimation module (1002), configured for separately performing luminance weight estimation on pixels in the raw image to obtain a luminance weight set corresponding to each of the pixels, wherein each luminance weight in the luminance weight set corresponds to one color component;

a calculation module (1003), configured for performing, for any pixel in the raw image based on a luminance weight set corresponding to the pixel, weighted summation on color components comprised in a first target region in which the pixel is located, to obtain a luminance value corresponding to the pixel, wherein the first target region is an image region of a first preset size with the pixel as a reference point; and

a generation module (1004), configured for generating, based on the luminance values respectively corresponding to the pixels in the raw image, a luminance assessment map corresponding to the raw image.

13. The image luminance assessment apparatus according to claim 12, wherein the estimation module (1002) comprises:

an extraction unit (10021), configured for separately performing, based on values of color components of each of the pixels in the raw image, local color feature extraction on the pixels, to obtain a local color feature set; and
a first determination unit (10022), configured for determining, based on the local color feature set, the luminance weight set corresponding to each of the pixels in the raw image.

14. A non-transitory computer readable storage medium, on which a computer program is stored, wherein the computer program, when executed by a processor (1201), causes the processor (1201) to implement the image luminance assessment method according to any one of claims 1 to 11.

15. An electronic device (1200), comprising:

a processor (1201); and
a memory (1202), configured for storing instructions executable by the processor (1201), wherein
the processor (1201) is configured for reading the executable instructions from the memory (1202), and executing the instructions to implement the image luminance assessment method according to any one of claims 1 to 11.

Acquiring a raw image on which luminance assessment is to be performed — 101

Separately performing luminance weight estimation on pixels in the raw image to obtain a luminance weight set corresponding to each of the pixels — 102

Performing, for any pixel in the raw image based on a luminance weight set corresponding to the pixel, weighted summation on color components included in a first target region in which the pixel is located, to obtain a luminance value corresponding to the pixel — 103

Generating, based on the luminance values respectively corresponding to the pixels in the raw image, a luminance assessment map corresponding to the raw image — 104

FIG. 1

Separately performing, based on values of color components of each of the pixels in the raw image, local color feature extraction on the pixels, to obtain a local color feature set — 1021

Determining, based on the local color feature set, the luminance weight set corresponding to each of the pixels in the raw image — 1022

FIG. 2

Determining, for any pixel in the raw image, respective energy proportions of driving energy of respective color components within a range of a second target region in which the pixel is located to total driving energy of all color components, as a local color feature corresponding to the pixel

10211

Determining a set of obtained local color features as the local color feature set

10212

**FIG. 3**

Determining, for any pixel in the raw image, a dominant color component from the color components in the second target region in which the pixel is located

10221

Determining, based on an energy proportion of the dominant color component, luminance weights respectively corresponding to the color components included in the pixel

10222

**FIG. 4**

Determining, for any pixel in the raw image, a dominant color component from the color components in the second target region in which the pixel is located — 10221

Determining, in response to the dominant color component being a pre-specified target color component, whether the energy proportion of the dominant color component is greater than or equal to a first proportion threshold — 102221

Acquiring, in response to the energy proportion of the dominant color component being greater than or equal to the first proportion threshold, a dominant color filter template preset for the dominant color component, and determining, based on the dominant color filter template, the luminance weights respectively corresponding to the color components corresponding to the pixel — 102222

Determining, in response to the energy proportion of the dominant color component being less than the first proportion threshold and greater than or equal to a second proportion threshold, based on the first proportion threshold and the second proportion threshold, a weight adjustment coefficient corresponding to the energy proportion of the dominant color component — 102223

Adjusting, by using the weight adjustment coefficient, luminance weights included in the dominant color filter template, and determining, based on an adjusted color filter template, the luminance weights respectively corresponding to the color components corresponding to the pixel — 102224

Acquiring a preset balanced color filter template in response to the dominant color component being not a pre-specified target color component — 102225

Determining, based on the balanced color filter template, the luminance weights respectively corresponding to the color components included in the pixel — 102226

FIG. 5

Performing, by an encoder included in a pre-trained luminance estimation model, downsampling encoding on the raw image to obtain an initial feature map — 1023

Performing, by a feature enhancement network included in the luminance estimation model, luminance feature enhancement on the initial feature map to obtain an enhanced feature map — 1024

Performing, by a decoder included in the luminance estimation model, upsampling decoding on the enhanced feature map to obtain a restored feature map — 1025

Separately performing, by a weight calculation unit included in the luminance estimation model, normalization processing on color feature values of pixels included in the restored feature map, to obtain the luminance weight set corresponding to each of the pixels — 1026

**FIG. 6**

Luminance Estimation Model 700

Raw Image → Encoder 701 → Initial Feature Map → Feature Enhancement Network 702

Luminance Weight Set ← Weight Calculation Unit 704 ← Restored Feature Map ← Decoder 703 ← Enhanced Feature Map

**FIG. 7**

| Acquiring a sample image | 801 |

$\downarrow$

| Converting the sample image into a sample luminance map | 802 |

$\downarrow$

| Performing region segmentation on the sample luminance map, and setting, based on a current training task type, training task label values for pixels respectively included in segmented regions | 803 |

$\downarrow$

| Performing, by an initial luminance estimation model, luminance weight estimation on pixels in the sample image to obtain predicted luminance weight sets respectively corresponding to the pixels | 804 |

$\downarrow$

| Determining, based on the predicted luminance weight sets, predicted luminance values respectively corresponding to the pixels in the sample image | 805 |

$\downarrow$

| Determining, based on the predicted luminance value and the training task label value, a prediction error corresponding to the training task type | 806 |

$\downarrow$

| Adjusting a parameter of the initial luminance estimation model based on the error | 807 |

$\downarrow$

| Determining a current initial luminance estimation model as a trained luminance estimation model when the initial luminance estimation model with the adjusted parameter meets a preset training termination condition | 808 |

**FIG. 8**

Determining, for any pixel in the raw image, driving energy of each type of color component and a number of pixels included in each type of color, within a range of the first target region in which the pixel is located

1031

Determining average pixel energy of each type of color component based on the driving energy of each type of color component and the number of pixels included in each type of color component

1032

Performing weighted summation on obtained average pixel energy based on the luminance weight set corresponding to the pixel, to obtain the luminance value corresponding to the pixel

1033

FIG. 9

Acquisition Module  1001

Estimation Module  1002

Calculation Module  1003

Generation Module  1004

FIG. 10

Acquisition Module 1001

Estimation Module 1002

10023
Encoding Unit

10024
Enhancement Unit

10025
Decoding Unit

10026
Normalization Unit

10021
Extraction Unit

100211
First Determination Subunit

100212
Second Determination Subunit

10022
First Determination Unit 100221

Third Determination Subunit

100222
Fourth Determination Subunit

1103
Calculation Module

10031
Second Determination Unit

10032
Third Determination Unit

10033
Calculation Unit

Generation Module 1004

FIG. 11

1201

Processor

1203                    1202                    1204

Input Means          Memory          Output Means

Electronic Device 1200

FIG. 12